# EUROPÄISCHE PATENTSCHRIFT

(11) **EP 0 910 271 B1**
(45) Veröffentlichungstag und Bekanntmachung des Hinweises auf die Patenterteilung: **20.12.2000**
(21) Anmeldenummer: 97926979.2
(22) Anmeldetag: 05.06.1997
(51) Int. Cl.: A47J 43/04, A47J 19/04, A47J 43/25

(54) **UNIVERSELLES KÜCHENGERÄT**
UNIVERSAL KITCHEN MACHINE
ROBOT DE CUISINE UNIVERSEL

(30) Priorität: 08.06.1996 DE 19622979
(43) Veröffentlichungstag der Anmeldung: 28.04.1999
(73) Patentinhaber: Kedzierski, Albert, 86316 Friedberg (DE)
(72) Erfinder: Kedzierski, Albert, 86316 Friedberg (DE)
(74) Vertreter: Müller, Karl-Ernst, Dr., Dipl.-Ing.
(86) Internationale Anmeldenummer: DE9701130
(87) Internationale Veröffentlichungsnummer: WO9747225

(56) Entgegenhaltungen:
- EP-A- 0 570 685
- WO-A-92/19139
- DE-B- 1 181 091
- DE-U- 9 409 356
- FR-A- 1 584 144

## Beschreibung

Die Erfindung betrifft ein Küchengerät zum Bearbeiten und Verarbeiten von Nahrungsmitteln mit einem röhrenförmigen, verschließbaren und liegend angeordneten Kessel, an dessen vorderer Stirnwand eine Auslaßöffnung vorgesehen ist, mit einem ersten von einem Antriebsmotor angetriebenen Werkzeug, welches an einer in Längsrichtung des Arbeitskessels verlaufenden und in einem Wellenrohr rotierend geführten Welle befestigt und mittels einer das Wellenrohr beaufschlagenden Vorschubeinheit über die Länge des Arbeitskessels bewegbar ist.

Ein Küchengerät mit den vorgenannten Merkmalen ist in der WO 92/19 139 beschrieben; das universelle Küchengerät soll dabei zum Bearbeiten und Verarbeiten von Nahrungsmitteln durch Hacken, Mischen, Rühren, Kneten, Pressen oder dergleichen oder zur Herstellung von Emulsionen aus Nahrungsmitteln geeignet sein, wozu unterschiedliche Werkzeuge, beispielsweise Messer oder Flügelmischer jeweils austauschbar an der durch den Arbeitskessel bewegbaren Welle angeschlagen sind. Nach einem Ausführungsbeispiel ist als auf die Welle aufzusetzendes Werkzeug auch eine scheibenförmige Preßplatte mit einer auf deren äußeren Umfang angeordneten Ringdichtung vorgesehen, wobei die Preßplatte zum Entleeren des Arbeitskessels ohne Rotation nur über die Vorschubeinheit längs des Arbeitskessels bewegt wird.

Mit einer derartigen Ausbildung ist der Nachteil verbunden, daß die Preßplatte als Werkzeug nach einem Bearbeitungsvorgang im Austausch gegen das auf der Welle befindliche Werkzeug wie Messer oder Flügelmischer auf die Welle aufgesetzt werden muß, was nicht nur entsprechend aufwendig ist, sondern auch während der Ver- und Bearbeitung von Lebensmitteln eine Öffnung des Arbeitskessels erforderlich macht und damit der Gefahr des Hinzutretens von Bakterien Vorschub leistet.

Der Erfindung liegt daher die Aufgabe zugrunde, ein Küchengerät der eingangs genannten Art derart weiterzubilden, daß Ver- und Bearbeitung von Nahrungsmitteln bzw. das Entleeren des Arbeitskessels ohne einen Werkzeugwechsel möglich sind.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß in dem Arbeitskessel ein zweites, scheibenförmiges und in seinem Außendurchmesser dem Innendurchmesser des Arbeitskessels entsprechendes Werkzeug mittels der Vorschubeinheit über die Länge des Arbeitskessels bewegbar angeordnet ist und das erste Werkzeug in Längsrichtung des Arbeitskessels relativ zum zweiten Werkzeug beweglich und in einer zugeordneten Ausnehmung des zweiten Werkzeuges versenkbar ist und daß das zweite Werkzeug zu seiner Bewegung über die Länge des Arbeitskessels an dem von der Vorschubeinheit beaufschlagten und zum Vorschub des ersten Werkzeuges gleitend durch das zweite Werkzeug geführten Wellenrohr ankoppelbar ist.

Mit der Erfindung ist der Vorteil verbunden, daß für die Ver- und Bearbeitung der Nahrungsmittel das an der in Rotation versetzten Welle befestigte erste Werkzeug durch das im Arbeitskessel befindliche Nahrungsmittel hindurchbewegt werden kann, wobei das zweite Werkzeug seine Ruhelage beibehält; nach dem entsprechenden Ver- und Bearbeitungsvorgang wird die Welle mit dem daran sitzenden Werkzeug einschließlich des sie umfassenden Wellenrohres zurückgezogen, bis das Werkzeug in die dafür vorgesehene Aussparung in dem zweiten Werkzeug eintritt; ohne einen Umbau kann alsdann das zweite Werkzeug an das Wellenrohr angekoppelt werden, so daß bei erneutem Betrieb der Vorschubeinheit nun das zweite Werkzeug in Längsrichtung durch den Arbeitskessel bewegbar ist. Auf diese Weise ist ein Eingriff von außen in den Arbeitskessel bzw. die darin arbeitenden Aggregate nicht erforderlich.

Nach einem Ausführungsbeispiel der Erfindung ist vorgesehen, daß das zweite Werkzeug als scheibenförmige Preßplatte mit einer auf dem äußeren Umfang angeordneten Ringdichtung ausgebildet ist, wobei nach einem Ausführungsbeispiel der Erfindung die in dem zweiten Werkzeug angeordnete Ausnehmung der Form des ersten Werkzeuges entspricht. Dabei kann die Ausnehmung auch so gestaltet sein, daß mehrere, gegebenenfalls auswechselbare Werkzeuge in die Ausnehmung passend einschiebbar sind.

Nach einem Ausführungsbeispiel der Erfindung ist vorgesehen, daß das auf die Welle aufzusetzende erste Werkzeug als ein Flügelmesser mit zwei einander gegenüberstehenden Flügeln ausgebildet und die in dem zweiten Werkzeug angeordnete Ausnehmung der Form des ersten Werkzeuges entsprechend ausgestaltet ist.

In einer besonderen Ausführungsform sieht die Erfindung weiterhin zur Verringerung der Baugröße des Küchengeräts eine Modifikation der aus der gattungsbildenden WO 92/19139 bereits bekannten Vorschubeinheit für das Wellenrohr vor, soweit diese das Wellenrohr beaufschlagende Vorschubeinheit aus einem an einer ortsfesten und über einen Motorantrieb drehbaren Spindel in Längsrichtung des Arbeitskessels verfahrbaren und den Antriebsmotor für die das erste Werkzeug in Rotation versetzende Welle tragenden Schlitten besteht. Gemäß der Erfindung ist nun vorgesehen, daß der Antriebsmotor an einer parallel zum röhrenförmigen Arbeitskessel und mit radialem Abstand zu dem Wellenrohr angeordneten Führungsschiene geführt und fest mit dem durch die angetriebene Spindel bewegbaren Wellenrohr verbunden und mit der Welle zu deren Antrieb über einen den radialen Abstand überbrückenden Zahnriemen gekoppelt ist.

Hieraus ergibt sich in vorteilhafter Weise eine Verringerung der Baugröße, was sich insbesondere bei einem vergleichsweise lang ausgeführten Arbeitskessel mit einem entsprechend großen Hub der Vorschubeinheit positiv bemerkbar macht.

Die Erfindung sieht schließlich noch vor, daß Arbeitskessel, Antriebsmotor und Vorschubeinheit in einem gemeinsamen Gehäuse angeordnet sind.

In der Zeichnung sind Ausführungsbeispiele der Erfindung wiedergegeben, welche nachstehend beschrieben sind. Es zeigen:
- Fig. 1: Arbeitskessel und Werkzeug eines Küchengerätes in einer Seitenansicht im Schnitt,
- Fig. 2: das zweite Werkzeug in einer Einzeldarstellung in Draufsicht,
- Fig. 3: das Küchengerät mit Antrieb in einer schematischen, teilweise geschnittenen Seitenansicht,
- Fig. 4: eine schematische Rückansicht auf die Antriebsseite des Küchengerätes.

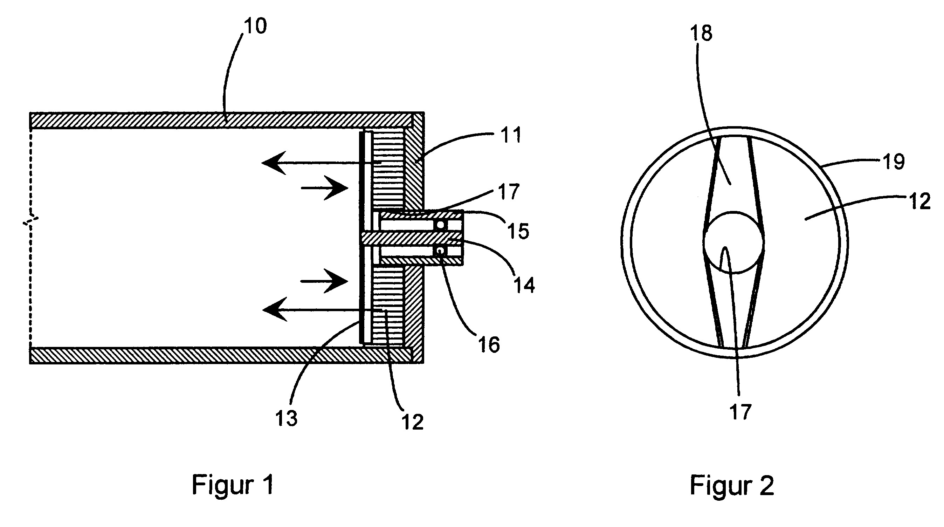

In Figur 1 ist mit 10 ein Arbeitskessel bezeichnet, an dessen hinterer Stirnwand 11 eine Preßplatte 12 als zweites Werkzeug in ihrer Ruhestellung anliegt. Mit 13 ist ein der Ver- und Bearbeitung eines Nahrungsmittels dienendes Messer als erstes Werkzeug bezeichnet, welches an dem Ende einer Welle 14 sitzt, die über einen nicht dargestellten Antriebsmotor in Rotation versetzbar ist; die Welle 14 ist im Inneren eines sie umschließenden Wellenrohres 15 angeordnet, welches Wellenrohr 15 durch die hintere Stirnwand 11 sowie durch die Preßplatte 12 in einer darin vorgesehenen Gleitführung 17 bewegbar ist; zur Abstützung der Welle 14 gegen das Wellenrohr 15 dient ein Kugellager 16.

Wie sich auch aus Figur 2 ergibt, ist das zweite Werkzeug 12 als eine scheibenförmige Preßplatte ausgebildet, die auf ihrem äußeren Umfang eine Ringdichtung 19 trägt und eine Aussparung 18 aufweist, die bei dem dargestellten Ausführungsbeispiel in ihrer Formgebung auf ein als Flügelmesser mit zwei einander gegenüberstehenden Flügeln ausgebildetes erstes Werkzeug 13 ausgelegt ist. Die Ausnehmung 18 in dem zweiten Werkzeug 12 ist dabei so bemessen, daß das erste Werkzeug 13 vollständig in die Ausnehmung 18 eintreten kann, wonach an dem zweiten Werkzeug 12 eine glatte Stirnfläche ausgebildet ist, die beim Vorschub des zweiten Werkzeuges 12 durch den Arbeitskessel 10 für dessen Entleerung sorgt.

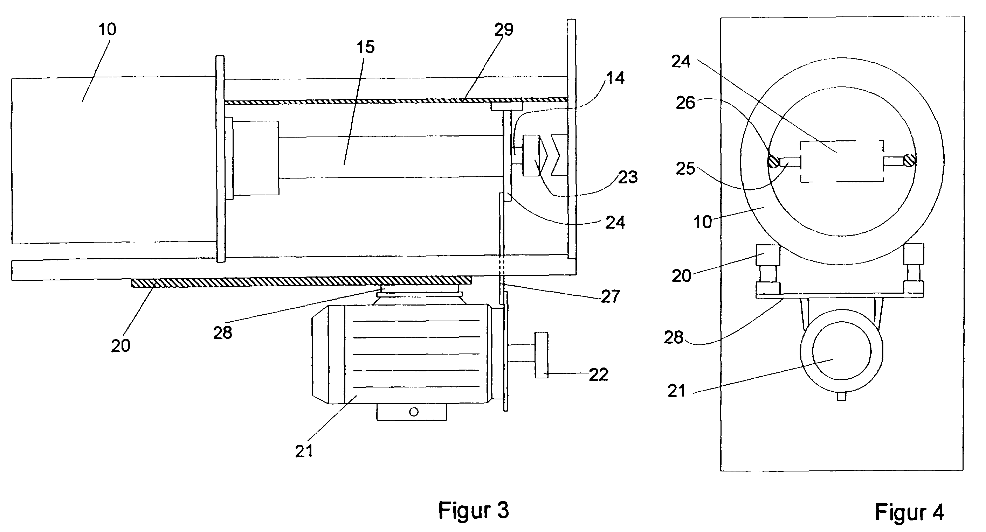

Aus den Figuren 3 und 4 ergibt sich das Küchengerät mit weiteren Einzelteilen zu dessen Antrieb. So ist hängend unter dem Arbeitskessel 10 und parallel zu dessen Längsachse mit radialem Abstand zu dem Wellenrohr 15 bzw. der Welle 14 eine Führungsschiene 20 angeordnet, an welcher ein Antriebsmotor 21 mittels einer Gleitführung 28 in Längsrichtung des Arbeitskessels 10 verschiebbar angeordnet ist. Die Abtriebsscheibe 22 des Antriebsmotors 21 ist mit einer der Welle 14 an deren Ende zugeordneten Zahnriemenscheibe 23 über einen nicht dargstellten Zahnriemen gekoppelt, so daß über den Antriebsmotor 21 die Welle 14 in Drehung zu versetzen ist. Der Antriebsmotor 21 ist mit dem Wellenrohr 15 über eine starre Verbindung 27 fest verbunden.

Wie auch beim gattungsbildenden Stand der Technik gemäß WO 92/19139 verwirklicht, sind parallel zu dem in der Ausgangsstellung über den Arbeitskessel vorstehenden Wellenrohr 15 Spindeln 26 angeordnet, die von einem nicht dargestellten Motorantrieb in Drehung versetzt werden. Das Wellenrohr 15 trägt an seinem Ende eine Grundplatte 24, die bei einer Abstützung an einer Schiene 29 mit seitlichen Ansätzen 25 an den beiden Spindeln 26 derart geführt ist, daß eine Drehung der Spindeln 26 zu einer Längsbewegung des Wellenrohres 24 führt.

Im Betrieb des Küchengerätes wird nun über den Antriebsmotor 21 die Welle 14 bewegt, so daß sich das im Inneren des Arbeitskessels 10 an der Welle 14 sitzende erste Werkzeug 13 rotierend bewegt; über den nicht dargestellten Motorantrieb werden die Spindeln 26 gedreht, so daß sich das Wellenrohr 15 im Sinne einer Vorschubeinheit längs durch den Arbeitskessel 10 bewegt und dabei das Werkzeug 13 vorschiebt; hierzu gleitet das Wellenrohr 15 in einer zugeordneten Gleitführung sowohl in der hinteren Stirnseite 11 als auch in einer Gleitführung 17 in dem in dieser ersten Phase feststehenden zweiten Werkzeug 12. Nach Beendigung des Ver- und Bearbeitungsvorganges wird das Wellenrohr 15 zurückgezogen, bis das erste Werkzeug 13 in die Ausnehmung 18 des zweiten Werkzeuges 12 eingetreten ist, so daß sich an dem zweiten Werkzeug 12 eine glatte Oberfläche ergibt. Hiernach wird das zweite Werkzeug 12 an das Wellenrohr 15 angekoppelt, so daß ein erneuter Vorschub des Wellenrohres 15 über die Drehung der Spindeln 26 durch den Arbeitskessel 10 zu einem Herauspressen des in dem Arbeitskessel 10 befindlichen Nahrungsmittels durch das zweite Werkzeug 12 führt.

## Patentansprüche

1. Küchengerät zum Bearbeiten und Verarbeiten von Nahrungsmitteln mit einem röhrenförmigen, verschließbaren und liegend angeordneten Kessel (10), an dessen vorderer Stirnwand eine Auslaßöffnung vorgesehen ist, mit einem ersten (13) von einem Antriebsmotor angetriebenen Werkzeug, welches an einer in Längsrichtung des Arbeitskessels verlaufenden und in einem Wellenrohr (15) rotierend geführten Welle (14) befestigt und mittels einer das Wellenrohr aufschlagenden Vorschubeinheit über die Länge des Arbeitskessels (10) bewegbar ist, dadurch gekennzeichnet, daß in dem Arbeitskessel (10) ein zweites, scheibenförmiges und in seinem Außendurchmesser dem Innendurchmesser des Arbeitskessels (10) entsprechendes Werkzeug (12) mittels der Vorschubeinheit über die Länge des Arbeitskessels (10) bewegbar angeordnet ist und das erste Werkzeug (13) in Längsrichtung des Arbeitskessels (10) relativ zum zweiten Werkzeug (12) beweglich und in einer zugeordneten Ausnehmung (18) des zweiten Werkzeuges (12) versenkbar ist und daß das zweite Werkzeug (12) zu seiner Bewegung über die Länge des Arbeitskessels (10) an dem von der Vorschubeinheit beaufschlagten und zum Vorschub des ersten Werkzeuges (13) gleitend durch das zweite Werkzeug (12) geführten Wellenrohr (15) ankoppelbar ist.

2. Küchengerät nach Anspruch 1, dadurch gekennzeichnet, daß das zweite Werkzeug (12) als scheibenförmige Preßplatte mit einer auf dem äußeren Umfang angeordneten Ringdichtung ausgebildet ist.

3. Küchengerät nach Anspruch 1 oder 2, dadurch gekennzeichnet, daß die in dem zweiten Werkzeug (12) angeordnete Ausnehmung (18) der Form des ersten Werkzeuges (13) entspricht.

4. Küchengerät nach Anspruch 3, dadurch gekennzeichnet, daß das auf die Welle (14) aufzusetzende erste Werkzeug (13) als ein Flügelmesser mit zwei einander gegenüberstehenden Flügeln ausgebildet und die in dem zweiten Werkzeug (12) angeordnete Ausnehmung (18) der Form des ersten Werkzeuges (13) entsprechend ausgestaltet ist.

5. Küchengerät nach einem der Ansprüche 1 bis 4, wobei die das Wellenrohr beaufschlagende Vorschubeinheit aus einem an einer ortsfesten und über einen Motorantrieb drehbaren Spindel in Längsrichtung des Arbeitskessels verfahrbaren und den Antriebsmotor für die das erste Werkzeug in Rotation versetzende Welle tragenden Schlitten besteht, dadurch gekennzeichnet, daß der Antriebsmotor (21) an einer parallel zum röhrenförmigen Arbeitskessel (10) und mit radialem Abstand zu dem Wellenrohr (15) angeordneten Führungsschiene geführt und fest mit dem durch die angetriebene Spindel (26) bewegbaren Wellenrohr (15) verbunden und mit der Welle (14) zu deren Antrieb über einen den radialen Abstand überbrückenden Zahnriemen gekoppelt ist.

6. Küchengerät nach einem der Ansprüche 1 bis 5, dadurch gekennzeichnet, daß Arbeitskessel (10), Antriebsmotor (21) und Vorschubeinheit in einem gemeinsamen Gehäuse angeordnet sind.

## Claims

1. Kitchen appliance for preparing and processing food having a tubular, sealable and horizontally disposed basin (10), at the front end wall of which an outlet opening is provided, having a first tool (13) driven by a drive motor and fastened to a shaft (14), which extends in longitudinal direction of the working basin and is guided rotatably in a shaft tube (15), and movable over the length of the working basin (10) by means of a forward feed unit acting upon the shaft tube, characterized in that a second, disk-shaped tool (12), the outside diameter of which corresponds to the inside diameter of the working basin (10), is disposed in the working basin (10) so as to be movable over the length of the working basin (10) by means of the forward feed unit and the first tool (13) is movable in longitudinal direction of the working basin (10) relative to the second tool (12) and countersinkable in an associated recess (18) of the second tool (12) and that the second tool (12) for its motion over the length of the working basin (10) is connectable to the shaft tube (15), which is acted upon by the forward feed unit and for forward feed of the first tool (13) is guided slidingly through the second tool (12).

2. Kitchen appliance according to claim 1, characterized in that the second tool (12) takes the form of a disk-shaped press plate having an annular seal disposed at the outer periphery.

3. Kitchen appliance according to claim 1 or 2, characterized in that the recess (18) disposed in the second tool (12) corresponds to the shape of the first tool (13).

4. Kitchen appliance according to claim 3, characterized in that the first tool (13), which is to be mounted onto the shaft (14), takes the form of a blade cutter having two mutually opposing blades and the recess (18) disposed in the second tool (12) is designed so as to correspond to the shape of the first tool (13).

5. Kitchen appliance according to one of claims 1 to 4, wherein the forward feed unit acting upon the shaft tube comprises a slide, which is displaceable in longitudinal direction of the working basin on a stationary spindle rotatable by means of a motor drive and which carries the drive motor for the shaft setting the first tool in rotation, characterized in that the drive motor (21) is guided along a guide rail, which is disposed parallel to the tubular working basin (10) and with radial clearance relative to the shaft tube (15), and is firmly connected to the shaft tube (15) movable by means of the driven spindle (26) and is coupled to the shaft (14) for driving the latter via a toothed belt which bridges the radial clearance.

6. Kitchen appliance according to one of claims 1 to 5, characterized in that working basin (10), drive motor (21) and forward feed unit are disposed in a common housing.

## Revendications

1. Appareil de cuisine pour travailler et traiter des denrées alimentaires comportant un récipient (10) de forme tubulaire, pouvant être fermé et disposé couché, sur la paroi avant duquel est prévue une ouverture de sortie, un premier outil (13) entraîné par un moteur d'entraînement, lequel outil est fixé sur un arbre (14) orienté dans le sens longitudinal de la marmite de travail et guidé de façon rotative dans un tube d'arbre (15), et est mobile sur la longueur du récipient de travail (10) au moyen d'une unité d'avance agissant sur le tube d'arbre, caractérisé en ce que, dans le récipient de travail (10), un deuxième outil (12) en forme de disque et correspondant par son diamètre extérieur au diamètre intérieur de la marmite de travail (10) est disposé de façon mobile au moyen de l'unité d'avance sur la longueur du récipient de travail (10) et le premier outil (13) est mobile dans le sens longitudinal du récipient de travail (10) par rapport au deuxième outil (12) et peut être enfoncé dans un évidement (10) attribué du deuxième outil (12) et en ce que le deuxième outil (12) peut être couplé pour son mouvement sur la longueur de la marmite de travail (10) au tube d'arbre (15) sollicité par l'unité d'avance et guidé de façon coulissante par le deuxième outil pour l'avance du premier outil (13).

2. Appareil de cuisine selon la revendication 1, caractérisé en ce que le deuxième outil (12) est conçu sous la forme d'un plateau de serrage en forme de disque avec un joint annulaire d'étanchéité disposé à la périphérie extérieure.

3. Appareil de cuisine selon la revendication 1 ou 2, caractérisé en ce que l'évidement (18) ménagé dans le deuxième outil (12) correspond à la forme du premier outil (13).

4. Appareil de cuisine selon la revendication 3, caractérisé en ce que le premier outil (13) à poser sur l'arbre (14) est conçu comme un couteau à ailettes avec deux ailettes se faisant face et l'évidement (18) disposé dans le deuxième outil (12) est conçu en fonction de la forme du premier outil (13).

5. Appareil de cuisine selon l'une quelconque des revendications 1 à 4, dans lequel l'unité d'avance sollicitant le tube d'arbre comprend un coulisseau déplaçable sur une broche fixe et pivotante au moyen d'un entraînement motorisé dans le sens de la longueur du récipient de travail et portant le moteur d'entraînement pour l'arbre mettant le premier outil en rotation, caractérisé en ce que le moteur d'entraînement (21) est guidé sur un rail de guidage disposé parallèlement au récipient de travail (10) de forme tubulaire et à une distance radiale du tube d'arbre (15), est relié de façon fixe au tube d'arbre (15) mobile par la broche (26) entraînée et est couplé avec l'arbre (14) pour son entraînement par une courroie crantée surmontant l'espacement radial.

6. Appareil de cuisine selon l'une quelconque des revendications 1 à 5, caractérisé en ce que le récipient de travail (10), le moteur d'entraînement (21) et l'unité d'avance sont disposés dans un boîtier commun.
